# EUROPEAN PATENT APPLICATION

(11) **EP 3 907 390 A1**
(43) Date of publication of application: **10.11.2021**
(21) Application number: 20382368.7
(22) Date of filing: 05.05.2020
(51) Int. Cl.: F02C 6/16, F01K 23/10, F03G 6/00, F03G 6/06, F02C 1/05

(54) **POWER GENERATION PLANT**

(71) Applicant: Fundación Cener, 31621 Sarriguren, Navarra (ES)
(72) Inventor: ZAVERSKY, Fritz, E-31621 Sarriguren, Navarra (ES); CABELLO NÚÑEZ, Francisco, E-31621 Sarriguren, Navarra (ES); BERNARDOS GARCÍA, Ana, E-31621 Sarriguren, Navarra (ES)
(74) Representative: ABG Intellectual Property Law, S.L.

(57) **Abstract**

The present invention provides a power generation plant comprising a concentrated solar power system configured to heat a first working fluid, a first thermal energy storage system configured to store the thermal energy of the first working fluid, a compressor system configured to increase the pressure of air as a second working fluid, a compressed air storage configured to store the air compressed in the compressor system, a combined cycle power generation system configured to generate power, said combined cycle power generation system comprising a topping Brayton cycle gas turbine subsystem and a bottoming Rankine cycle steam turbine subsystem.

## Description

### TECHNICAL FIELD OF THE INVENTION

The present invention belongs to the field of energy production plants and, more particularly, to the field of thermal solar power combined cycle plants with thermal energy and compressed air storage systems.

### BACKGROUND OF THE INVENTION

Currently, the sector of energy generation faces an increasing number of challenges which hamper the swift introduction of sustainable technologies. One of these difficulties is the offset between the energy production peaks of renewable energy technologies and the high demand periods.

Most of the renewable energy generation technologies are based on sun and wind power, which are either dependent on the season and time of the day or simply unpredictable, whereas the peak demand periods are dependent on the routines of the population or the industry production schedules.

In response to this offset between the generation and demand, the energy market favors the peak demand periods with higher energy purchase prices, and keeps the low demand periods, or off-peak demand, in the lower range of prices.

So far, fossil fuel power plants with short start-up times and good load following capabilities have been applied to meet peak demands. Additionally, current power grids may allow for a certain peak shaving effect by means of specific energy storage plants, such as hydroelectric pumping power plants, which are the most mature, commercially available and widely adopted largescale energy storage technology; these power plants usually involve at least two water reservoirs or water bodies at significantly different heights, and thus depend on geographic favorable boundary conditions.

Another available large-scale energy storage technology are flow batteries, or battery electric storage in general.

However, these known solutions are either restricted to very specific terrain conditions, such as mountain areas (pumped hydro storage), or do not have the necessary life time (batteries).

On the other hand, there exists the solar thermal power, or concentrated solar power (CSP) sector that offers the advantage of dispatchable power generation, due to cost-effective thermal energy storage. However, the problem concerning central receiver solar thermal plants is the fact that the solar-to-thermal and the thermal-to-electric conversion efficiencies correlate conversely when upscaling the power plant. The solar-to-thermal energy conversion process (heliostat field and solar receiver) works best for small solar fields and low nominal power of the solar receiver. On the other hand, the power cycle becomes more efficient and also cheaper per kWe, the higher the power output is. Therefore, when upscaling a central receiver plant, this trade-off needs to be considered and does not allow very high-capacity plants and thus limits the economic competitiveness of CSP central receiver technology.

These difficulties (variable renewable energy output, no clear large-scale storage solution, and too expensive dispatchable solar thermal plants) pose a serious hindrance to the implementation of renewable energy production technologies at large scale, drive investors away and keep the renewable energy production costs high.

### SUMMARY OF THE INVENTION

The present invention provides an alternative solution for the aforementioned problems, by a power generation plant according to claim 1. In dependent claims, preferred embodiments of the invention are defined.

In a first inventive aspect, the invention provides a *power generation plant, comprising:*
*a concentrated solar power system configured to heat a first working fluid by means of concentrated solar radiation;*
*a first thermal energy storage system configured to store the thermal energy of the first working fluid, the first thermal energy storage being in fluid communication with the concentrated solar power system;*
*a compressor system configured to increase the pressure of air as a second working fluid, the compressor system comprising at least two compressor stages;*
*a compressed air storage in fluid communication with the compressor system, the compressed air storage being configured to store the air compressed in the compressor system;*
*a combined cycle power generation system, configured to generate power, and comprising:*
   - *a topping Brayton cycle gas turbine subsystem in fluid communication with the compressed air storage, and comprising a gas turbine, the gas turbine subsystem being configured to generate power by expanding compressed air from the compressed air storage in the gas turbine, wherein the gas turbine subsystem further comprises a high temperature heat exchanger configured to heat the compressed air with the first working fluid prior to its expansion;*
   - *a bottoming Rankine cycle steam turbine subsystem configured to generate power, comprising a boiler, wherein the boiler is configured to heat a fourth working fluid with the outlet flow of air of the gas turbine subsystem;*
*characterized in that the power generating plant further comprises*
   - *a low temperature heat exchanger configured to cool the compressed air with a third working fluid after each compressor stage of the compressor system, and configured to recover thermal energy with the third working fluid;*
   - *a second thermal energy storage in fluid communication with the low temperature heat exchanger, the second thermal energy storage being configured to store and selectively release the thermal energy recovered with the third working fluid;*
*wherein the low temperature heat exchanger is further configured to selectively heat with the thermal energy stored in the second thermal energy storage the compressed air upon release from the compressed air storage to feed the gas turbine subsystem.*

Throughout all this document, the working fluid will be understood as any fluid which fulfils the requirements of compressibility, heat capacity, density, melting point and other properties which enable the use of the fluid in the heat exchangers, the thermodynamic cycles, as a coolant or as a thermal fluid. For example, in a preferred embodiment, the second working fluid is air, which is suitable as a working fluid of the topping cycle, it is stable along a wide range of temperatures and can store energy when compressed. Also, in an embodiment, the fourth working fluid, used in the bottoming Rankine cycle which involves a phase change, is steam.

The low temperature heat exchanger is capable of switching from a series configuration of the third working fluid circuitry during the compressed air heating process (prior to expansion), and a parallel configuration of the third working fluid circuitry during the cooling of the compressed air between the compressor system's stages. In an embodiment, this configuration switch is achieved by means of selectively operating valves (pressurized ducts) and dampers (atmospheric ducts).

Advantageously, the arrangement of the heat exchangers and energy storage systems allows for a higher efficiency of the power plant, by recovering the heat produced during the compression of air, and by pre-heating the compressed air prior to the expansion in the topping cycle subsystem. Furthermore, the arrangement of the compressed air storage and the thermal energy storage allow for the storage of electric energy during low demand periods, and the release of the stored energy during peak demand periods, thus adapting the production of energy to the energy demand of the grid.

The power plant of the invention allows time shifting between Brayton cycle air compression and actual usage of the compressed air in the power cycle.

The compression of the working fluid (the air) can be carried out applying low-price electricity from the grid during high renewable output, as is the case for solar generation or wind power, or coupling the compressor to such solar or/and wind system (hybrid plant layout).

Advantageously, by removing the compression work of the power cycle, the conversion efficiency of the power cycle is remarkably increased.

The compressed air is stored and later released when electric power needs to be produced by the plant, as is the case during high peak demand hours. Then, the pressurized air is drawn from the storage, heated up and expanded in an air turbine.

The compressed air storage allows using excess generation capacity of the power grid to compress air and store it in an underground cavern or aboveground in man-made vessels.

Advantageously, this layout provides a renewable power plant, such as a solar power plant, subjected to the drawback of variable power output, with adaptive capabilities that enables it to produce electric power and meet the demand during high peak demand hours.
The thermal-to-electric energy conversion efficiency of concentrated solar power system is increased compared to the existing power plants. Therefore, the specific cost of the power cycle of the present invention is reduced, so that small and compact power tower plants with high optical efficiency become economically viable.

In a particular embodiment, *the low temperature heat exchanger is further configured to selectively heat with the thermal energy stored in the second thermal energy storage the compressed air upon release from the compressed air storage prior to expansion to turbine inlet pressure to feed the gas turbine subsystem*

In a particular embodiment, *the gas turbine subsystem comprises a compound turbine with a high pressure part and a low pressure part, and a reheat heat exchanger configured to reheat the air with the first working fluid before entering the low pressure part.*

Advantageously, the reheating of the air after the high pressure part of the gas turbine subsystem increases the energy of the air flow, and thus improves the efficiency and output of the gas turbine subsystem.

In a particular embodiment, *the boiler of the steam turbine subsystem is further configured to heat the fourth working fluid with the remaining thermal energy of the outlet flow of the reheat heat exchanger.*

Advantageously, feeding the excess heat of the reheat heat exchanger increases the energy transferred to the fourth working fluid, and thus improves the efficiency and output of the steam turbine subsystem.

In a particular embodiment, *the first heat storage is a high temperature thermocline storage.*

Advantageously, the high temperature storage provides a storage with a high energy density; the thermocline or stratified storage provides a cost effective storage of thermal energy.

In a particular embodiment, *the second heat storage is a low temperature thermocline storage.*

Advantageously, the low temperature thermocline storage provides a long lasting storage of thermal energy recovered from the compressor system.

In a particular embodiment, *the compressed air storage comprises* a *pressure vessel configured to store the compressed air.*

The term pressure vessel should be understood as any kind of receptacle capable of storing a fluid, in particular a gas, at a different pressure in respect to the atmospheric pressure.

Advantageously, the pressure vessel provides a reliable and long lasting storage of energy in the form of compressed air, which can be used on demand.

In a particular embodiment, *the pressure vessel of the compressed air storage is immersed in water.*

Advantageously, the immersion of the pressure vessel in a fluid, in particular in a natural or artificial body of water, allows for the balance of the pressure of the fluid with the hydrostatic pressure, thus enabling the use of inexpensive, low resistance materials for the pressure vessel.

In a particular embodiment, *the pressure vessel of the compressed air storage is configured as a geological formation, such as a cave, configured to store the compressed air.*

Advantageously, a natural or artificial geological formation is used as a pressure vessel. In some embodiments, the geological formation is a mine; in other embodiments, the geological formation is a natural cave.

In a particular embodiment, *the compressor system is configured to receive a power supply from a renewable energy power plant.*

Advantageously, the use of a renewable energy power source, such as wind power, solar power, hydro power or a combination thereof, for the power supply of the compressor system allows for a sustainable power generation dispensing the use of fossil fuels.

In a particular embodiment, *the first and*/*or the second thermal energy storage system comprise thermochemical energy storage technology.*

Advantageously, the use of thermochemical energy storage technology allows for a higher energy density than non-reactive thermal energy storage systems.

In a particular embodiment, *the first and*/*or the second thermal energy storage systems comprise latent and*/*or sensible heat thermal energy storage technology.*

Advantageously, the use of technologies involving latent heat, sensible heat and/or phase change phenomena allows for a very high energy density storage.

In a particular embodiment, *the high temperature heat exchanger and*/*or the reheat heat exchanger are regenerative heat exchangers.*

Advantageously, the use of a regenerative heat exchanger, or regenerator, allows for a simple and effective heat exchange.

In a particular embodiment, *the regenerative heat exchangers comprise valve means configured to expand compressed air from the compressed air storage in a controlled manner.*

Advantageously, the use of the valves of the regenerator allow for the regulation of the pressure of the compressed air prior to the expansion in the gas turbine subsystem.

In a particular embodiment, *the outlet of the high temperature heat exchanger and*/*or the outlet of the boiler of the Rankine subsystem are in fluid communication with an external element, such that the residual heat of the fluids is exploited in low temperature applications.*

In a particular embodiment, *the low temperature heat exchanger is in fluid communication with an external element, such that part or all the heat recovered in the low temperature heat exchanger is exploited in low temperature applications.*

Advantageously, the use of residual heat from the power plant allows for a further recovery of heat from the power plant. This feature is particularly advantageous for its use in low temperature heat applications such as hot water supply, domestic heating, or desalination processes.

In a particular embodiment, *the Rankine cycle steam turbine subsystem is configured as an organic Rankine cycle (ORC) and the fourth working fluid is an organic compound.*

Advantageously, the use of organic Rankine cycle technology in the steam turbine subsystem allows for a compact and still efficient bottoming cycle.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows an embodiment of the power generation plant of the invention.
- Figure 2: This figure shows another embodiment of the power generation plant of the invention, comprising a low pressure part of the gas turbine and a re-heater of the second working fluid before the low pressure part of the turbine.
- Figure 3: This figure shows another embodiment of the power generation plant of the invention, comprising a re-heater of the second working fluid and utilization of the residual heat from the re-heater.

### DETAILED DESCRIPTION OF THE INVENTION

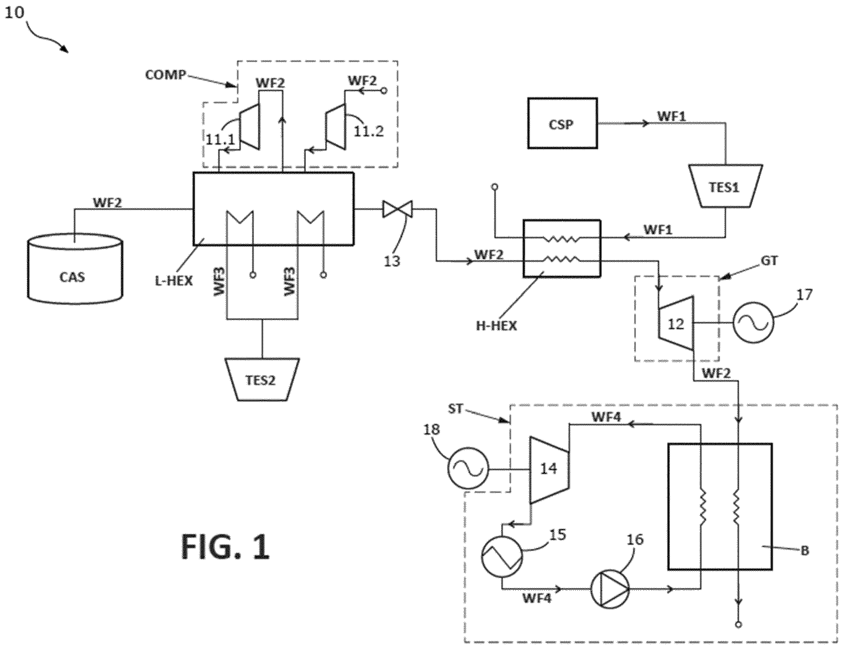

Figure 1 shows a preferred embodiment of the power generation plant (10) of the invention; in this Figure 1, the main source of energy of the power generation plant is a concentrated solar power system (CSP) of the central tower receiver type, working with air as heat transfer fluid or first working fluid (WF1). The nominal solar receiver outlet temperature is about 800 °C, but depending on the solar concentrating and receiver technology, it is possible to have higher or lower nominal temperatures. The solar receiver is of open volumetric type and comprises a ceramic or metallic absorber matrix. The solar receiver could either be of fixed matrix type, or active/moving matrix type (e.g. a rotary disc receiver).

The hot air (WF1) exiting the solar receiver (CSP) enters the first thermal energy storage system (TES1), which in this embodiment is a packed-bed thermocline thermal energy storage system, where the thermal energy is stored for a subsequent use. The fluid communication between the concentrated solar power system (CSP) and the first thermal energy storage system (TES1) is implemented for example by means of insulated ducts.

When the energy production is required, the hot air (WF1) is released at a controlled rate from the first thermal energy storage system (TES1) and led to the high temperature heat exchanger (H-HEX), where the hot air (WF1) will transfer the heat to the second working fluid (WF2), the compressed air, prior to the intake of compressed air (WF2) in the gas turbine subsystem (GT).

Before being heated, the second working fluid (WF2) is compressed by means of a compressor system (COMP), and stored at the compressed air storage (CAS). The compressor system (COMP) in this embodiment is a four-stage compression train (simplified in the figures as a two-stage (11.1, 11.2) compressor train), with three intercoolers and an aftercooler, implemented by the low temperature heat exchanger (L-HEX). The thermal energy recovered by the intercoolers and aftercooler by means of the third working fluid (WF3) is stored in a low-temperature packed-bed thermocline, the second thermal energy storage (TES2).

The heat generated during compression is then reused for preheating the compressed air (WF2) released from the compressed air storage (CAS) before throttling the compressed air (WF2) to the inlet pressure of the gas turbine subsystem (GT). The preheating of the air prior to throttling is necessary in order to avoid icing or condensation problems in the throttling valve (13) when air expands and cools down.

Therefore, the low temperature heat exchanger (L-HEX) is configured such that the intercoolers and aftercoolers can be also used as heaters before the expansion process. The layout of this heat exchanger (L-HEX) is of shell-and-tube type, where the third working fluid (WF3), in this embodiment atmospheric air, for cooling or heating, flows on the shell side and the compressed air flows on the tube side; in a preferred embodiment the third working fluid (WF3) circuitry of the low temperature heat exchanger (L-HEX), is configured to switch between a parallel flow for air cooling during compression and serial flow for air heating during the release of the compressed air (WF2).

Electricity production is achieved by means of a combined cycle power generation system comprising a topping Brayton cycle gas turbine subsystem (GT) and a bottoming Rankine cycle steam turbine subsystem (ST).

In the embodiment shown in Figure 1, the topping gas turbine subsystem (GT) comprises a gas turbine (12) fed with the compressed air (WF2) heated in the high temperature heat exchanger (H-HEX) and expanded therein, such that the turbine (12) is coupled with a turbo-generator (17).

After the expansion in the gas turbine subsystem (GT), the second working fluid (WF2) is at a relatively low pressure, but it still retains energy in the form of heat; this energy is employed as the hot source for the bottoming steam turbine subsystem (ST). Thus, the outlet of the gas turbine subsystem (GT) is in fluid communication with the boiler (B) of the steam turbine subsystem (ST), where the heat is transferred to a fourth working fluid (WF4) with phase change behavior in the range of working temperatures. In an embodiment this fourth working fluid (WF4) is water, i.e. steam, while in another embodiment is an organic compound and the steam turbine subsystem (ST) is an ORC, organic Rankine cycle subsystem.

As in conventional Rankine cycles, the fourth working fluid (WF4) is expanded in a steam turbine (14), and then condensed (15) and compressed (16) again before re-entering the boiler (B); the steam turbine (14) is coupled to a turbo-generator (18), such that its rotation generates electricity.

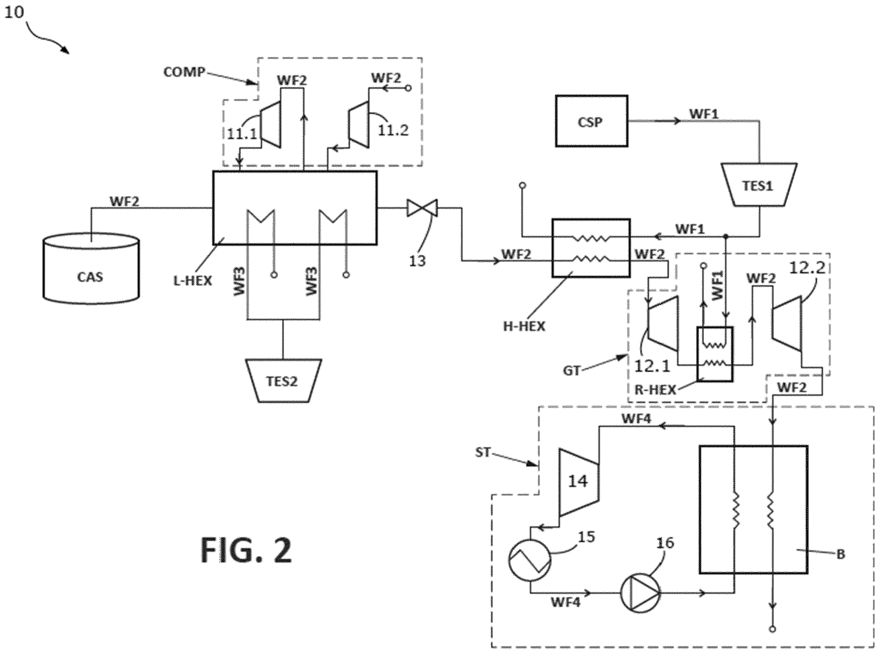

Figure 2 shows an embodiment of the invention with a modified combined cycle; in this embodiment, the topping gas turbine subsystem (GT) comprises a compound gas turbine (12), with a high pressure part (12.1) and a low pressure part (12.2), or high and low pressure turbines (12.1, 12.2); thus, the high pressure turbine (12.1) receives compressed air (WF2) at high pressure, produces its expansion, and then conveys the partially expanded compressed air (WF2) to the re-heat heat exchanger, or re-heater (R-HEX). In the re-heater (R-HEX), the partially expanded compressed air (WF2) is heated with hot air (WF1) from the first heat storage (TES1), its enthalpy increased, and the compressed air (WF2) led to the inlet of the low pressure turbine (12.2). In a preferred embodiment, the expansion ratio of the high pressure turbine (12.1) is chosen such that the exit temperature of the high pressure turbine (12.1) is very similar to the exit temperature of low pressure turbine (12.2).

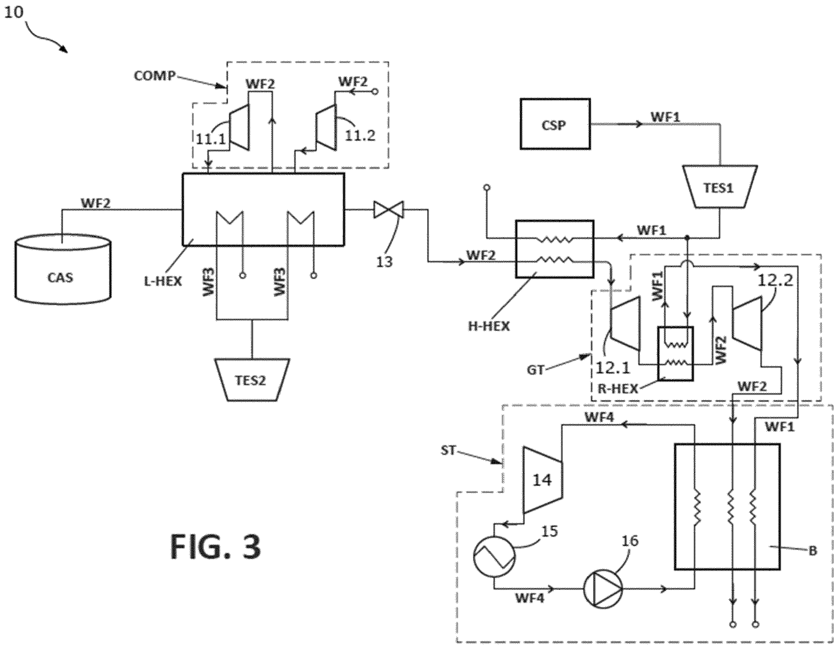

Figure 3 shows an improvement of the previous embodiment, where the exhaust of the re-heater (R-HEX) is in fluid communication with the boiler (B) of the steam turbine subsystem (ST), where the remaining thermal energy of the hot air (WF1) is transferred to the fourth working fluid (WF4). If this residual heat of the hot air (WF1) was not used, the return air (WF1) would have to be wasted by rejection to the ambient. The positive effect of the reuse of the reheat air (WF1) return stream is that the power output and overall energy conversion ratio of the power plant (10) is increased. Also, the rated power output of the bottoming steam turbine subsystem (ST) is increased, in some cases roughly doubled, which increases the steam cycle efficiency.

The compressed air storage (CAS) is implemented in an embodiment by means of a geological formation, such as a natural cavern. In other embodiments, in order to overcome any restriction to plant (10) location arising from the unavailability of underground reservoirs, an artificial pressure vessel, such as a storage tank, is used. An improvement over the previous embodiment is represented by a pressure vessel immersed in a body of water. By immersing the pressure vessel, the surrounding pressure, dependent on the depth at which the vessel is immersed, balances the stresses produced by the pressure of the compressed air (WF2) against the walls of the vessel; thus, less resistant, and therefore not very costly materials can be used in the manufacturing of the pressure vessel.

The high temperature heat exchanger (H-HEX) and/or the reheat heat exchanger (R-HEX) are either of conventional shell-and-tube type, or alternatively a fixed-bed regenerative systems, or regenerator. The fixed-bed regenerative system is charged under atmospheric pressure and discharged under pressurized conditions. The vessel size of this regenerative heat exchange system is limited due to the pressurization process, which requires several two-vessel subunits in parallel depending on the power rating. The second reason for arranging several two-vessel subunits in parallel is the requirement for a continuous thermal power transfer: while one system is pressurized or depressurized, the parallel systems need to take over. The great advantage of this arrangement is that the size of heat exchangers (H-HEX, R-HEX) can be reduced compared to conventional shell-and-tube heat exchangers. Another advantage is that the valves of the regenerative system can be directly used as expansion control valves for the compressed air (WF2). Furthermore, the pressurization of the regenerators can be easily done by filling them with compressed air (WF2), coming from the air storage volume (CAS).

The power supply required to power the compressor system (COMP) comes conventionally from the grid, generated by unspecified sources; however, in order to enhance the sustainability of the power generation, environmentally friendly power sources for the compressor system (COMP) such as the following are preferred:
- Photovoltaic systems. Owing to economic considerations it makes sense to combine three technologies in a single power plant: solar thermal (CSP), compressed air and photovoltaic. The photovoltaic installation powers the compressor system (COMP) during the day. The CSP part charges the high-temperature thermal storage (TES1). This configuration results in a hybrid CSP-photovoltaic plant providing full dispatchability.
- Wind turbines. Owing to economic considerations it makes sense to combine three technologies in a single power plant: solar thermal (CSP), compressed air and wind power. The wind turbines facility powers the compressor system (COMP) during windy periods. This configuration results in a hybrid CSP-wind turbine plant providing full dispatchability. Further, wind turbines could power the compressors directly (COMP) without intermediate conversion to electricity.

- Power provided by a hybrid plant, which combines photovoltaic and wind turbines. This configuration results in a hybrid CSP-photovoltaic- wind turbine plant providing full dispatchability.
- Mechanical or electric power provided by renewable technologies not disclosed above, e.g. tidal or wave energy.

In an embodiment, the thermocline thermal energy storage systems (TES1, TES2) incorporate thermochemical energy storage technology or latent heat storage. By doing so, the overall functionality as described above remains the same, but the energy storage density and/or the discharge/charge behavior (e.g. outlet temperature stabilization) of the thermal energy storage systems (TES1, TES2) could improve dramatically, reducing the size and costs of the thermal energy storage systems (TES1, TES2) for a given thermal storage capacity.

Also, the residual heat of the first and/or second working fluid (WF1, WF2) can be used for applications where the temperature level is suitable; some examples of low temperature applications where the utilization of the heat might be possible are desalination, district or local heating, water heating, food production, etc.

## Claims

1. Power generation plant (10), comprising:
a concentrated solar power system (CSP) configured to heat a first working fluid (WF1) by means of concentrated solar radiation;
a first thermal energy storage system (TES1) configured to store the thermal energy of the first working fluid (WF1), the first thermal energy storage (TES1) being in fluid communication with the concentrated solar power system (CSP);
a compressor system (COMP) configured to increase the pressure of air as a second working fluid (WF2), the compressor system (COMP) comprising at least two compressor stages (11.1, 11.2);
a compressed air storage (CAS) in fluid communication with the compressor system (COMP), the compressed air storage (CAS) being configured to store the air compressed in the compressor system (COMP);
a combined cycle power generation system, configured to generate power, and comprising:
- a topping Brayton cycle gas turbine subsystem (GT) in fluid communication with the compressed air storage (CAS), and comprising a gas turbine (12), the gas turbine subsystem (GT) being configured to generate power by expanding compressed air from the compressed air storage (CAS) in the gas turbine (12), wherein the gas turbine subsystem (GT) further comprises a high temperature heat exchanger (H-HEX) configured to heat the compressed air with the first working fluid (WF1) prior to its expansion;
- a bottoming Rankine cycle steam turbine subsystem (ST) configured to generate power, comprising a boiler (B), wherein the boiler (B) is configured to heat a fourth working fluid (WF4) with the outlet flow of air of the gas turbine subsystem (GT);
**characterized in that** the power generating plant (10) further comprises
- a low temperature heat exchanger (L-HEX) configured to cool the compressed air with a third working fluid (WF3) after each compressor stage (11.1, 11.2) of the compressor system (COMP), and configured to recover thermal energy with the third working fluid (WF3);
- a second thermal energy storage (TES2) in fluid communication with the low temperature heat exchanger (L-HEX), the second thermal energy storage (TES2) being configured to store and selectively release the thermal energy recovered with the third working fluid (WF3);
wherein the low temperature heat exchanger (L-HEX) is further configured to selectively heat with the thermal energy stored in the second thermal energy storage (TES2) the compressed air upon release from the compressed air storage (CAS) to feed the gas turbine subsystem (GT).

2. Power generation plant (10) according to the previous claim, wherein the gas turbine subsystem (GT) comprises a compound turbine (12) with a high pressure part (12.1) and a low pressure part (12.2), and a reheat heat exchanger (R-HEX) configured to reheat the air with the first working fluid (WF1) before entering the low pressure part.

3. Power generation plant (10) according to the previous claim, wherein the boiler (B) of the steam turbine subsystem (ST) is further configured to heat the fourth working fluid (WF4) with the remaining thermal energy of the outlet flow of the reheat heat exchanger (R-HEX).

4. Power generation plant (10) according any of the previous claims, wherein the first heat storage (TES1) is a high temperature thermocline storage.

5. Power generation plant (10) according to any of the previous claims, wherein the second heat storage (TES2) is a low temperature thermocline storage.

6. Power generation plant (10) according to any of the previous claims, wherein the compressed air storage (CAS) comprises a pressure vessel configured to store the compressed air.

7. Power generation plant (10) according to the previous claim, wherein the pressure vessel of the compressed air storage (CAS) is immersed in water.

8. Power generation plant (10) according to previous claim 6, wherein the pressure vessel of the compressed air storage (CAS) is configured as a geological formation, such as a cave, configured to store the compressed air.

9. Power generation plant (10) according to any of the previous claims, wherein the compressor system (COMP) is configured to receive a power supply from a renewable energy power plant.

10. Power generation plant (10) according to any of the previous claims, wherein the first and/or the second thermal energy storage system (TES1, TES2) comprise thermochemical energy storage technology.

11. Power generation plant (10) according to any of the previous claims, wherein the first and/or the second thermal energy storage systems (TES1, TES2) comprise latent and/or sensible heat thermal energy storage technology.

12. Power generation plant (10) according to any of claims 2-11, wherein the high temperature heat exchanger (H-HEX) and/or the reheat heat exchanger (R-HEX) are regenerative heat exchangers.

13. Power generation plant (10) according to the previous claim, wherein the regenerative heat exchangers comprise valve means configured to expand compressed air from the compressed air storage (CAS) in a controlled manner.

14. Power generation plant (10) according to any of the previous claims, wherein the outlet of the high temperature heat exchanger (H-HEX) and/or the outlet of the boiler (B) of the Rankine subsystem (ST) are in fluid communication with an external element, such that the residual heat of the fluids is exploited in low temperature applications.

15. Power generation plant (10) according to any of the previous claims, wherein the low temperature heat exchanger (L-HEX) is in fluid communication with an external element, such that part or all the heat recovered in the low temperature heat exchanger (L-HEX) is exploited in low temperature applications.

16. Power generation plant (10) according to any of the previous claims, wherein the Rankine cycle steam turbine subsystem (ST) is configured as an organic Rankine cycle (ORC) and the fourth working fluid (WF4) is an organic compound.
